# NEUE EUROPÄISCHE PATENTSCHRIFT

(11) **EP 2 902 433 B2**
(45) Veröffentlichungstag und Bekanntmachung des Hinweises auf die Entscheidung über den Einspruch: **05.10.2022**
(45) Hinweis auf die Patenterteilung: 18.09.2019
(21) Anmeldenummer: 14153636.7
(22) Anmeldetag: 03.02.2014
(51) Int. Cl.: C08J 5/04, C04B 35/622, C04B 35/626, C04B 35/63, C04B 35/634, C04B 35/83, B01J 2/12, B01J 2/14, B29B 9/08, B29B 9/14, B01J 2/30, B29B 7/00, B29B 7/06, B29B 7/90

(54) **Kohlenstofffaserpellet-Herstellungsverfahren**
Process for manufacturing carbon fibres pellets
Procédé de fabrication de granules en fibres de carbone

(43) Veröffentlichungstag der Anmeldung: 05.08.2015
(73) Patentinhaber: Mitsubishi Chemical Advanced Materials GmbH, 48691 Vreden (DE)
(72) Erfinder: RADEMACKER, Tim, 21680 Stade (DE); ALBERTS, Heinrich, 51519 Odenthal (DE)
(74) Vertreter: Hansen, Jochen

(56) Entgegenhaltungen:
- EP-A1- 2 233 517
- EP-A1- 2 282 879
- DE-A1-102010 008 349
- JP-A- H07 102 080
- US-A- 5 639 807
- US-A1- 2004 077 771
- DATABASE WPI Week 200320 Thomson Scientific, London, GB; AN 2003-203805 XP002721384, -& JP 2002 212876 A (TOHO RAYON KK) 31. Juli 2002 (2002-07-31)
- W H Lee ET AL: "XPS study of carbon ber surfaces treated by thermal oxidation in a gas mixture of O 2 /(O2 + ? N2 )", Applied Surface Science, 1. Februar 2001 (2001-02-01), Seiten 136-142, XP055105726, Gefunden im Internet: URL:http://www.sciencedirect.com/science/a rticle/pii/S0169433200005584/pdfft?md5=6d9 ea54fcf8874680b79694876459ed5&pid=1-s2.0-S 0169433200005584-main.pdf [gefunden am 2014-03-05]
- Anonymous: "granulation resp. impregnation of carbon and aramid fibers test report 17GH052", EIRICH Test report 17GH052, 27 March 2017 (2017-03-27), pages 1-12,
- Stella Job: "Composite Recycling Prepared by: Table of Contents", Knowledge Transfer Network Materials Knowledge Transfer Network Materials, 1 September 2010 (2010-09-01), pages 1-26, Retrieved from the Internet: URL:https://compositesuk.co.uk/system/file s/documents/Composite%20Recycling.pdf [retrieved on 2020-12-07]
- Anonymous: "Granulation of carbon and aramid fibres test report 17GH088", EIRICH test report 17GH088, 17 May 2017 (2017-05-17), pages 1-19,
- Anonymous: "EIRICH Intensive Mixer Type R", EIRICH Mixing Technology, 1 February 2012 (2012-02-01), pages 1-16,
- Christina Klein: "Granulation", EIRICH Machines, 1 January 2012 (2012-01-01), pages 1-19,
- H Dürr, Et Al: "Trocken- und Nabauaufbereitung von Dichtmassen mit Intensivmischern und EVATHERM Vakuumtechnik" In: "Untersuchungen und Anwendungen von Dichtungstechnik", 1 January 2001 (2001-01-01) pages 48-57,
- D. Burchart-Korol, J. Korol, P. Francik: "Application of the new mixing and granulation technology of raw materials for iron ore sintering process", Metalurgija Metalurgija, Croatian Metallurgical Society, 1 April 2012 (2012-04-01), pages 187-190,
- Prüfbericht P37-15-K0135, 14.06.2012

## Beschreibung

Die Erfindung betrifft ein Kohlenstofffaserpellet-Herstellungsverfahren

Zur Verstärkung von thermoplastischen oder duromeren Kunststoffen, Gummi und Kautschuk oder anorganischen Kompositen aus Keramik oder Beton werden vorzugsweise Füllstoffe oder Fasern bzw. Gewebe oder Gelege aus Fasermaterialien aller Art eingesetzt. Carbonfasermaterialien unterschiedlicher Form gewinnen in diesen Systemen eine immer stärkere Bedeutung, da sie eine sonst unerreichte Kombination aus extrem hoher Festigkeit bei geringem Gewicht und darüber hinaus elektrische Leitfähigkeit und anisotrope Wärmeleitfähigkeit bieten und in Abhängigkeit von der Zusatzmenge die Festigkeitswerte oder Leitfähigkeitswerte der Komposite bzw. der Verbundwerkstoffe erhöhen und gleichzeitig das Gewicht reduzieren.

Diese Eigenschaftskombination eröffnet Carbonfaser-verstärkten Kompositen viele neue technisch relevante Anwendungen insbesondere im Flugzeug-, Fahrzeug- und Maschinen- oder Gerätebau und in zunehmendem Maße für spezielle Anwendungen im Baubereich oder in beispielsweise hochwertigen Keramiken. Trotz des relativ hohen Preises der Carbonfasern steigt auf Grund der hohen und immer weiter steigenden Nachfrage das weltweite Produktionsvolumen ständig an.

Im technischen Kunststoffbereich haben sich für eine zunehmend größere Zahl von Anwendungen im Geräte, Fahrzeug-, Boots- oder Flugzeugbau Carbonfaserkomposites durchgesetzt. Da bei der Herstellung und Verarbeitung von mit Carbonfasern verstärkten Kunststoffen aller Art (CFK / CFRP) in mehr oder weniger großen Anteilen Abfall anfällt, steigt parallel zur Entwicklung des Primärgeschäftes auch das Volumen der zur Wiederverwertung anstehenden CFK-Abfälle.

Die Suche nach Anwendungsmöglichkeiten dieser CFK-Abfälle bzw. Wiedergewinnung der Carbonfasern aus diesen Produkten hat weltweit zu verschiedenen Verfahrensvorschlägen und Ergebnissen geführt: man kann unterscheiden zwischen mechanischen Aufbereitungsverfahren durch Zerkleinern oder Vermahlen der Komposites und chemischen oder thermischen Trennverfahren der üblicherweise vorliegenden Kunststoffmatrix und der Carbonfasern.

Die mechanischen Aufbereitungsverfahren ergeben CFK-Partikel mit unterschiedlicher Zusammensetzung und Größenverteilung der Einzelpartikel. Für diese Materialien sind verschiedene Einsatzmöglichkeiten im Bau- oder Kunststoffbereich bereits ausführlich im Stand der Technik benannt worden.

Beispielsweise wird in der Druckschrift EP 2 562 206 A1 ein Verfahren zur Wiederverwertung von CFK-Abfällen, bestehend aus carbonfaserhaltigen Duroplastprodukten, beschrieben, wobei nach der Zerkleinerung der CFK-Abfälle oder Ausschussteile diese durch Zugabe unterschiedlicher Bindemitteln beispielsweise Duroplastvorläufern, Thermoplasten, Elastomeren, Elastomervorläufern, Duroplasten oder beliebigen Mischungen dieser Komponenten in einem formgebenden Prozess in Formteile aus carbonfaserverstärktem Kunststoff überführt werden.

In der Druckschrift WO 2011/098486 A1 werden carbonfaserhaltige Werkstoffe aus Kunststoff, Kohlenstoff (z.B. Graphit) oder Beton ebenfalls zerkleinert und dann unter Zugabe von Bindemitteln wie beispielsweise Pech oder Harzen und ggf. weiteren z.B. oxidativen Behandlungsschritten unter Zugabe von z.B. Koks und ggf. weiteren Additiven in ein Formteil überführt und bei erhöhter Temperatur graphitiert. Die erhaltenen Verbundwerkstoffbauteile sollen vergleichbar zu neuwertigen Verbundwerkstoffprodukten eingesetzt werden können.

Auch die Wiedergewinnung der hochwertigen Carbonfasern aus Produktionsabfällen lässt sich nach verschiedenen im Stand der Technik bekannten Verfahren realisieren. Von besonderer Bedeutung sind die in verschiedenen Druckschriften oder wissenschaftlichen Veröffentlichungen beschriebenen pyrolytischen Verfahren. Exemplarisch sei auf die Druckschrift EP 2 282 879 B1 verwiesen. Die Pyrolyseverfahren bieten mehr oder weniger ausgeprägt die Möglichkeit, durch eine spezielle Prozessführung unter Schutzgas die Carbonfasern weitgehend von der Kunststoffmatrix zu befreien. Eine Nachbehandlung bei hoher Temperatur und Luftzusatz wird beschrieben, um die C-Fasern vollständig von gebildeten und anhaftenden Graphitresten zu befreien. Um einen Abbau der Carbonfasern zu vermeiden, verlangt dieses Verfahren eine aufwendige Prozesssteuerung. Bei entsprechender Verfahrensweise gelingt gleichzeitig eine polare Modifikation der Faseroberfläche ohne Schädigung der Carbonfaser, d.h. ohne Veränderung des Faserdurchmessers. Auf Basis der Oxidationsreaktion kann die Carbonfaseroberfläche Carboxyl- oder Hydroxylgruppen aufweisen. Diese polare Modifikation der Oberfläche kann sehr nützlich für die spätere Wiederverwendung der Carbonfasern für die Modifikation von Kunststoffen sein.

In der Druckschrift von W.H.Leea et al, Applied Surface Science 171(2002)136 ff, wird der Verlauf der Oxidation von Carbonfasern in einer Atmosphäre von O₂ und (O₂ / N₂)-Gemischen diskutiert. Man findet eindeutige Zusammenhänge zwischen Temperatur, Behandlungszeit und O₂-Angebot und oxidativen Strukturen an der Carbonfaseroberfläche. Die gemessene interlaminare Scherstabilität der Composites mit Carbonfasern, die den höchsten Anteil an polaren Strukturen wie C=O aufweisen, war den übrigen Produkten überlegen.

Die thermische Aufbereitungsprozesse von CFK-Abfällen aller Art werden vorzugsweise dann eingesetzt, wenn die reine Carbonfaser einer Neuverwertung zugeführt werden soll. Da die CFK-Recyclate in sehr unterschiedlicher Form anfallen, sind auch die pyrolysierten Recyclate sehr unterschiedlich in Größe und Form. Teilweise sind es Matten, teilweise faserige Strukturen oder wollige Knäuel. Um diese wertvollen Rohstoffe für eine Weiterverwendung zu nutzen, müssen weitere formgebende Prozesse angewendet oder entwickelt werden. Von besonderer technischer Bedeutung sind dementsprechende Schneid-, Mahl-oder Kompaktierverfahren zur Sicherung und Gewährung weiterer und neuer Anwendungsmöglichkeiten.

Durch bekannte Schneidverfahren oder Mahlverfahren kann man das stückige Pyrolysegut klassieren in faserige Materialien mit beliebigen Faserlängen. Carbonfaserabschnitte, die beispielsweise für die Herstellung von Carbonfaservliesen sehr gut geeignet sind, weisen zumeist Längen der Einzelfasern zwischen 3 bis etwa 20 cm, wenn gewünscht auch noch länger, auf. Durch unterschiedliche Mahlprozesse erhält man pulverförmige oder kurzfaserige Materialien, die einer Weiterverarbeitung zugeführt werden können. Für den Mahlprozess sind handelsübliche Schneidmühlen, Hammermühlen oder Pralltellermühlen besonders gut geeignet. Je nach der eingestellten Faserlängenverteilung hat das Mahlgut eine pulverige oder faserig-knäuelartige Struktur. Dementsprechend ist das Handling dieser Produkte für eine Weiterverarbeitung nicht einheitlich einfach, sondern je nach Struktur ist die erhaltene Recyclatware für technische Zudosierprozesse z.B. in der Kunststoffverarbeitung verwendbar oder eben nicht geeignet.

Im Stand der Technik sind zudem zahlreiche Verfahren und Prozesse bekannt, feinteilige oder staubende Produkte durch z.B. Kompoundierprozesse mit verschiedenen Kunststoffen oder Bindemitteln in sogenannte Masterbatches zu überführen, die dann in Granulatform vorliegen und einer weiteren Verarbeitung leicht zugänglich sind. Aus verschiedenen Gründen scheidet eine derartige Verfahrensweise mit konventionellen Extrudern in dem hier vorliegenden Fall aus, da die Carbonfaser bei einem scherintensiven Verarbeitungsprozess durch unkontrollierten Abbau geschädigt wird, was erheblich nachteilig ist.

In der Druckschrift US 5 639 807 wird ein mehrstufiges Verfahren beschrieben, nach dem Carbonfasern in einem Eirich-Mischer durch Zusatz von organischen oder wässrigen Schlichtelösungen oder Suspensionen vorbehandelt werden und dann unter Aufsprühen von Wasser in einem zweiten Bearbeitungsschritt auf einem Pelletierteller unter Rotation in Granulate überführt und anschließend getrocknet werden. Das zweistufige Verfahren führt zu Pellets, die zur Modifikation von Kunststoffen aller Art verwendet werden können, wobei hier Carbonneufaser- Pellets, die bis zu 50 Gew% an Zusätzen und anderen Fasern, Ruß, Glasmehl, Aramidfasern oder recycelte Carbonfasern enthalten können. Da die Trocknung organischer Lösungsmittel enthaltender Produkte zur Vermeidung von Explosionen aufwendig ist, wird ohne Zweifel ein nur mit wässrigen Systemen arbeitender einfacher Prozess überlegen sein.

Insgesamt erscheinen somit die Dosierbarkeit und das gesamte Handling der in der verarbeitenden Industrie eingesetzten Zwischenprodukte von besonderer Bedeutung: Dosierbarkeit und Handling sind essentiell für den technischen Erfolg der Materialien. Staubende oder faserige Materialien mit niedrigem Schüttgewicht und schlechter Dosierbarkeit z. B. aus einem Silo werden ungern und nur unter Vorbehalt verwendet.

Die Druckschrift US 2004/077771 A1 beschreibt Gemische aus vapor grown carbon fibers und bis 100% nano tubes.

Die Offenbarung der Druckschrift DE 10 2010 008 349A1 betrifft ein Verfahren zur Herstellung von Pellets aus Faserverbundwerkstoffen, wobei die Pellets Carbonfasern und wenigstens ein thermoplastisches Matrixmaterial enthalten.

Die Herstellung erfolgt in der Weise, dass man Abfälle von thermoplastischen Carbonfasercomposites und / oder textile Produktionsabfälle sammelt, ggf. zerkleinert und unter Zusatz von Thermoplastmaterial unter Erhitzen verpresst und die abgekühlten Platten anschließend zerkleinert.

Aus der Druckschrift EP 2 233 517 A1 ist ein Verfahren zur Aufbereitung von Carbonfaser-Polyepoxidharz-Komposite-Abfällen bekannt, wobei im ersten Schritt das CFK-Abfallmaterial pyrolysiert (so as to burn the thermosetting resin...) und das resultierende Carbonfasermaterial in einem Kneter mit einem Thermoplasten gemischt wird. In einer Variante wird das harzfreie Carbonfasermaterial mit einer wässrigen sizing-Lösung besprüht oder versetzt und dann das so behandelte Carbonfaser-Material wiederum in einem Kneter mit einem Thermoplasten soweit geknetet, dass die Carbon-Faseranteile deutlich zerkleinert werden. Anschließend kann das geschmolzene Komposite über einen Extruder ausgetragen und granuliert werden.

Aus der Druckschrift JP 2002-212876A ist ein Standardprozess für hergestellte Carbonfasern offenbart, wobei als Basis ein Copolymer aus ACN/Methacrylat verwendet und wie üblich pyrolysiert wird. Die erhaltenen Carbonfasern werden durch eine Elektrolyt-Lösung, wie beispielsweise Ammonsulfat, gezogen und getrocknet. Die Carbonfaser wird in eine Polymerschmelze, z.B. Polyoxymethylene oder Polycarbonate, eingetragen und das Produkt anschließend granuliert. Das erhaltene Komposite hat einen relativ hohen elektrischen Widerstand.

Der vorliegenden Erfindung liegt die Aufgabe zugrunde, ein Herstellungsverfahren für Kohlenstofffaserpellets aufzuzeigen, das es ermöglicht, homogene Kohlenstofffaserpellets herzustellen, die in eine einheitliche nicht staubende und problemlos rieselfähige Lieferform zu überführen und die in Weiterverarbeitungsprozessen leicht zu handhaben, insbesondere in automatisierten Dosiereinheiten verwendbar, leicht transportabel und durabel sind. Insbesondere sind die Rieselfähigkeit sowie die Formgebung und Pelletstabilität der herzustellenden Kohlenstofffaserpellets von besonderer Bedeutung.

Gelöst wird diese Aufgabe mit einem Herstellungsverfahren für Kohlenstofffaserpellets nach Anspruch 1.

Das Kohlenstofffaserpellet-Herstellungsverfahren umfasst das Schneiden und/oder Mahlen der zu Pellets zu verarbeitenden Kohlenstofffasern auf eine vorgegebene mittlere Länge, das Pyrolysieren der Kohlenstofffasern, das Mischen der pyrolysierten Kohlenstofffasern mit einer Lösung oder Suspension zu Agglomeraten in einem Mischer, der mit einem geneigten rotierenden Kessel ausgestattet ist, wobei innerhalb des geneigten rotierenden Kessels ein gegenläufig rotierender Wirbler angeordnet ist, der das Rühren der Agglomerate vollzieht, das Verdichten der Agglomerate durch Inkontaktbringen der Agglomerate mit der geneigten rotierenden Oberfläche und das Trocknen der Agglomerate zu Kohlenstofffaserpellets, wobei die Pelletisierung durch Binder in der Lösung oder Suspension einstufig in dem Mischer erfolgt, wobei die Kohlenstofffasern Recyclat-Carbonfasern sind.

Durch den Verfahrensschritt des Pyrolysierens wird die Qualität der gewünschten Kohlenstofffaserpellets in den Punkten Formgebung, Pelletstabilität und Stauben signifikant verbessert.

Überraschenderweise hat sich gezeigt, dass durch das Pyrolysieren der Kohlenstofffasern vor dem Mischen die herzustellenden Kohlenstofffaserpellets besonders rieselfähig und leicht zu handhaben sind, was im bisherigen Stand der Technik nicht gegeben war. Nunmehr können die Kohlenstofffaserpellets leicht in Transportbehältnissen befördert, leicht gehandhabt und sehr gut dosiert werden. Insbesondere sind die so hergestellten Kohlenstofffaserpellets nunmehr sogar extruderfähig, so dass dem Einsatz in Extrudern ohne etwaig notwendig werdende weitere Schritte nichts mehr im Wege steht. Auch für die in der Verarbeitungstechnik üblichen Kompoundierprozesse in einem Extruder sind die mit dem beanspruchten Herstellungsverfahren hergestellten Kohlenstofffaserpellets besonders gut geeignet. Das Pyrolysieren am Anfang des Herstellungsverfahrens bewirkt eine erheblich bessere Handhabbarkeit der herzustellenden Kohlenstofffaserpellets.

Dabei wird der Schritt des Pyrolysierens sowie des davor oder danach vorgesehenen Schneidens durch das Recyclieren von Kohlenstofffaserkompositen zu Recyclat-Carbonfasern bewirkt. Hierzu kann beispielsweise eine Recyclinganordnung mit einem Schneidwerk und einer nachgeordneten Pyrolyseeinheit mit den im Stand der Technik bekannten Energieeintragsmitteln verwendet werden, um die Kohlenstofffasern zu pyrolysieren. Die Überführung der oberflächlich anoxidierten polar modifizierten Recyclat-Carbonfasern gelingt in Gegenwart spezieller Bindersysteme in wässriger Phase in einem einstufigen Prozess beispielsweise unter Verwendung eines Mischers der Fa. Eirich GmbH (Hardheim, Deutschland).

Dabei wird ein Mischer verwendet, der mit einem geneigten rotierenden Kessel ausgestattet ist, wobei innerhalb des geneigten rotierenden Kessels ein gegenläufig rotierender Wirbler angeordnet ist, der das Rühren der Agglomerate vollzieht. Durch diese Ausgestaltung mit dem gegenläufig rotierenden Wirbler werden sehr homogene Kohlenstofffaserpellets nach dem Trocknen erzeugt.

Die erfindungsgemäß hergestellten Kohlenstofffaserpellets werden in vielfältiger Weise, beispielsweise als Modifikatoren für Kunststoffe oder Elastomere aller Art, verwendet. Von besonderer Bedeutung ist die Kombination dieser Pellets mit Polyolefinen wie Polypropylen, technischen Kunststoffen wie beispielsweise Polyamid, thermoplastischen Elastomeren oder Kautschuken aller Art. Genannt seien ferner die technisch interessanten Kombinationen aus den Pellets und Werkstoffen wie Polycarbonat, PVC, ABS oder anderen Styrolpolymeren und ihren Blends mit z.B. Polycarbonat, Polyether oder Polysulfonen, um nur einige der möglichen Kombinationen zu nennen. Von besonderem technischen Interesse ist die Verwendung der Pellets für technische Polymere wie z.B. Polyamid 6, Polyamid 6,6 oder andere aliphatische oder teilaromatische Polyamide, ferner mit Polyolefinen wie Polyethylen oder Polypropylen, PVC und schlagfest modifizierten PVC-Typen, ABS und ABS-Blends, Polycarbonat und Polycarbonatblends, thermoplastischen Polyurethanen, Polybutadien- und Butadiencopolymerkautschuken aus radikalischer oder metallorganischer Polymerisation und verschiedenen Fluorpolymeren wie z.B. PVDF.

Zur weiteren Optimierung der Kohlenstofffaserpellets erfolgt ein Hinzumischen von natürlichem oder synthetischem Graphit der Körnung 0 bis 100 µm, insbesondere 0,1 bis 20 µm bis zu 50 Gew.-% zu der Kohlenstofffaser-Lösung/Suspension-Mischung, wobei der Bereich zwischen 0,1 bis 20 µm besonders bevorzugt ist. Insbesondere ist ein Mischungsverhältnis von Kohlenstofffaser zu Graphit von 1:1 von besonderer Bedeutung, da sich hierdurch weitere besondere Vorteile wie die Staubfreiheit und Rieselfähigkeit ergeben bzw. diese Eigenschaften der Kohlenstofffaserpellets um ein Vielfaches verbessert werden, wodurch die Kohlenstofffaserpellets nahezu staubfrei rieselfähig sind. Ferner wird die elektrische Leitfähigkeit deutlich erhöht, der Oberflächenwiderstand sinkt hierbei.

Durch den Zusatz von Graphit wird zudem die Trocknung der wasserfeuchten Produkte erheblich verkürzt, da eine verbesserte Wärmeleitfähigkeit in den Kohlenstofffaserpellets vorliegt, und somit die Wirtschaftlichkeit des Verfahrens verbessert.

Das Kombinationsprodukt aus Kohlenstofffaser und Graphit führt zudem dazu, dass deutlich weniger Materialbedarf in den kohlenstofffaserverstärkten Kunststoff-Endprodukten nötig ist, um notwendige Endprodukteigenschaften wie Festigkeit und dergleichen zu realisieren.

Als weiterer Vorteil bei der ergänzenden Zufuhr von Graphit während der Herstellung der Kohlenstofffaserpellets ergibt sich, dass in einem Extruderverfahren zur Erhöhung der Leitfähigkeit von aus Thermoplasten bestehenden Kunststoff-Endprodukten kein zusätzliches Graphit zu etwaigen Kohlenstofffasern im Extruderprozess hinzugefügt werden muss, da das Graphit bereits schon im Kohlenstofffaserpellets-Herstellungsverfahren auf schonende Weise homogen eingefügt worden ist. Im Stand der Technik ist es nicht möglich ein Extruderverfahren unter Verwendung der Ausgangsstoffe Kohlenstofffaser, Graphit und thermoplastischer Kunststoff, wie beispielsweise Polypropylen oder Polycarbonat, produktschonend herzustellen, da aufgrund der Inhomogenitäten härter extrudiert werden muss. Während des härteren Extrudervorgangs werden jedoch die Kohlenstofffasern kaputt gemahlen, was zu einem deutlich höheren Anteil an benötigten Kohlenstofffasern führt. Die elektrische Leitfähigkeit wird durch den Graphit realisiert und die Festigkeit durch die Kohlenstofffaser. Insgesamt ergibt sich zudem noch eine sehr gute Wärmeleitfähigkeit. Selbstverständlich wird zudem noch eine Materialersparnis bewirkt, da erheblich schonender extrudiert werden kann und gleichzeitig eine homogene Durchmischung erfolgt. In Bezug auf die Materialeinsparung bei den erfindungsgemäß hergestellten Kohlenstofffaserpellets bei der Verwendung in Kunststoffformungsprozessen kann von einer Größenordnung von ca. Faktor 10 ausgegangen werden, so dass lediglich 1/10 an Kohlenstofffaserpellets verwendet werden muss. Aufgrund der homogen durchmischten erfindungsgemäß hergestellten Kohlenstofffaserpellets können die Kohlenstofffaserpellets erst in einem sehr späten Schritt in einen Extruderprozess eingefügt werden, wobei insbesondere die mechanischen Eigenschaften der Kohlenstofffasern erhalten bleiben.

Es kann sowohl natürlicher als auch synthetisch hergestellter Graphit verwendet werden. Entscheidend ist jedoch die Korngröße des zu verwendenden Graphits.

Als Lösung, Emulsion oder Suspension wird während des Herstellungsverfahrens eine wässrige emulgatorarme oder emulgatorfreie Polymerdispersion verwendet. Von besonderer Eignung für das erfindungsgemäße Verfahren sind Polymer- oder Copolymerdispersionen mit niedriger Filmbildungstemperatur. Diese Filmbildungstemperatur sollte möglichst unter Raumtemperatur, d.h. unter 21°C, bevorzugt unter 12°C und besonders bevorzugt unter 6°C, max. 5°C betragen, da bei diesen Temperaturen sehr gute Herstellungsergebnisse für die Pellets realisiert werden konnten. Für die Basis der Polymerdispersion wird ein Acrylsäureester-, Polyurethan- oder Polysiloxancopolymer verwendet. Alternativ oder ergänzend können wässrige Verdickerlösungen wie z. B. Polyvinylpyrrolidon oder Polyvinylpyrrolidoncopolymere mit Acrylsäure, Acrylsäureestern, Vinylacetat oder Caprolactam, verwendet werden.

Die Herstellung der Pellets aus gemahlenen oder geschnittenen Carbonfasern erfolgt stets in wässriger Dispersion unter Zusatz wässriger Emulsionen und wasserlöslicher oder in Wasser dispergierbaren Additiven. Als Emulsionen kommen vernetzbare oder nicht vernetzbare Acrylat-, Vinylacetat- oder Butadienhomo- und copolymerisat-, Polysiloxan- oder Polyurethancopolymerdispersionen in Frage. Neben den als Binder verwendeten Emulsions(co-)polymerisaten können wasserlösliche Polymere wie z.B. Polyvinylpyrrolidoncopolymere mit Vinylacetat oder auch Vinylcaprolactam mit Erfolg verwendet werden, um die Pelletstruktur und die Benetzbarkeit der Carbonfasern und damit auch ihre Eignung für die spätere Anwendung im Kunststoffbereich zu verbessern. Ferner können übliche und dem Fachmann vertraute weitere Zuschlagstoffe, Stabilisatoren oder Antioxidantien mit Erfolg eingesetzt werden.

Besonders gut, weil praktisch universell verwendbar, sind Acrylat- und Polyurethancopolymerdispersionen mit der angegebenen niedrigen Filmbildungstemperatur unter Raumtemperatur in Kombination mit ausgesuchten und auf die Pelletanwendung abgestimmten Zuschlagstoffen. Aufgrund der polaren Oberflächenstruktur der Recyclatfasern ziehen die verwendeten Komponenten und Polymerlösungen besonders gut auf die Fasern auf, während die verwendeten Binder vorzugsweise die Partikelstabilisierung unter Einhüllung der dispergierten Carbonfaserbündel übernehmen.

Aufgrund der besonders guten Benetzbarkeit der Recyclat-Carbonfasern und der Stabilisierung der Pelletisierung durch die hoch effektiven bevorzugten synthetischen Binder auf Acrylat- oder Polyurethancopolymerbasis erfolgt die Pelletisierung einstufig im Eirichmischer.

Das Mischen erfolgt in einer bevorzugten Variante in mehreren Schritten:

Nur eine erste Teilmenge der Kohlenstofffasern wird mit einem Teil der Lösung oder Suspension vermischt, wobei eine Basisdispersion gebildet wird.

Nach dem Mischen der ersten Teilmenge der Kohlenstofffasern mit einem Teil der Lösung oder Suspension, dem Herstellen der Basisdispersion, werden eine oder mehrere weitere Teilmengen der Kohlenstofffasern zusammen mit einem oder weiteren Teil der Lösung oder Suspension vermischt. Das Vermischen der Teilmengen erfolgt nach dem Herstellen der einzelnen Teilmengen. Alternativ erfolgt das Vermischen der weiteren Teilmengen in der ersten Teilmenge.

Falls gewünscht, können zur Erzielung besonderer Effekte auch gleichzeitig mit den Recyclatfasern Zuschlagstoffe wie gemahlener natürlicher oder synthetischer Graphit, feinteilige Füllstoffe aller Art oder feinteilige synthetische oder andere Fasermaterialien aller Art hinzugesetzt werden. Die Anteile der Zuschlagstoffe können bis zu 50 Gew.% betragen.

Insbesondere ist es vorteilhaft, wenn weitere Zuschlagstoffe, Ruß, Eisenoxidpigmente oder organische Pigmente während des Mischens hinzugefügt werden. Im Gemisch können als weitere Zusätze anorganische oder organische Produkte, beispielsweise andere Kohlenstoffprodukte wie Ruß, Graphit oder auch CFK-Mahlgut, vorgesehen sein.

Besonders bevorzugt werden Kohlenstofffasern mit einem Durchmesser von mindestens 5 µm und einer mittleren Faserlänge von 30 µm bis 6000 µm und einem Anteil von Sauerstoff und Stickstoff in den oberen Atomlagen von 15 bis 17 Gew.% verwendet.

### Ausführungsbeispiele

Beispielhaft wird das erfindungsgemäße Verfahren durch die Beschreibung der Herstellung von Pellets aus Kohlenstofffasern unterschiedlicher Länge bzw. Längenverteilung beschrieben und die erhaltenen Pellets im Weiteren durch Fotos und spezifische Angaben charakterisiert.

Nach der Pyrolyse werden die rohen Carbonfasermaterialien auf die gewünschte Länge geschnitten oder gemahlen. Allerdings fallen die gemahlenen Materialien nicht in einer einheitlichen Größenordnung an sondern müssen, falls eine verbessert einheitliche Verteilung gewünscht wird, durch Siebung klassiert werden.

Prinzipiell erfolgt die Herstellung der Pellets in einem Mischer mit schräggestelltem rotierendem Kessel und einer darin angeordneten gegenläufig arbeitenden Rührvorrichtung, dem sogenannten Wirbler. Der Wirbler besitzt in unterschiedlicher Höhe an der Rührersäule montierte beispielsweise messerartige oder stumpfe Rührblätter. Diese Kombination aus Wirbler und gegenläufigem schräggestelltem Kessel sorgt neben einer hervorragenden Durchmischung auch für eine gezielt stattfindende Agglomeration der eingefüllten üblicherweise in Wasser und Hilfsmitteln dispergierten Kohlenstofffasern und ggf. weiteren Zuschlagstoffen.

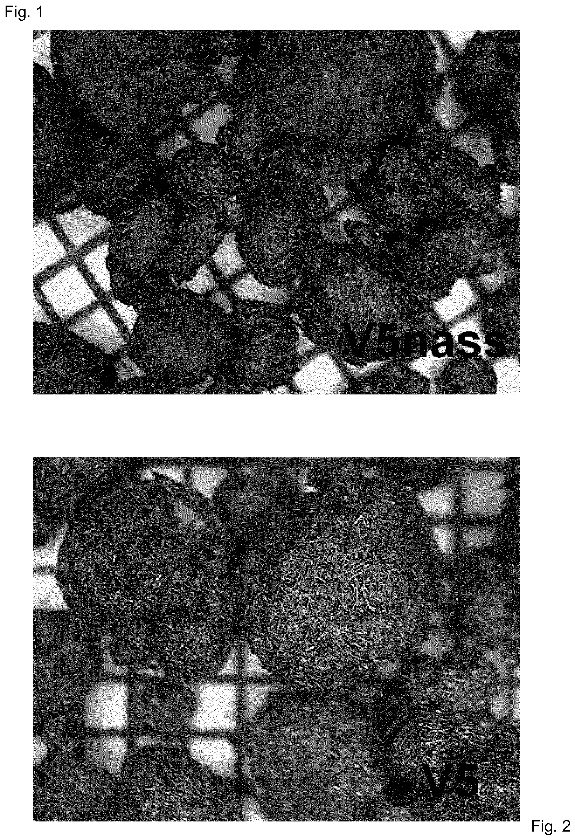

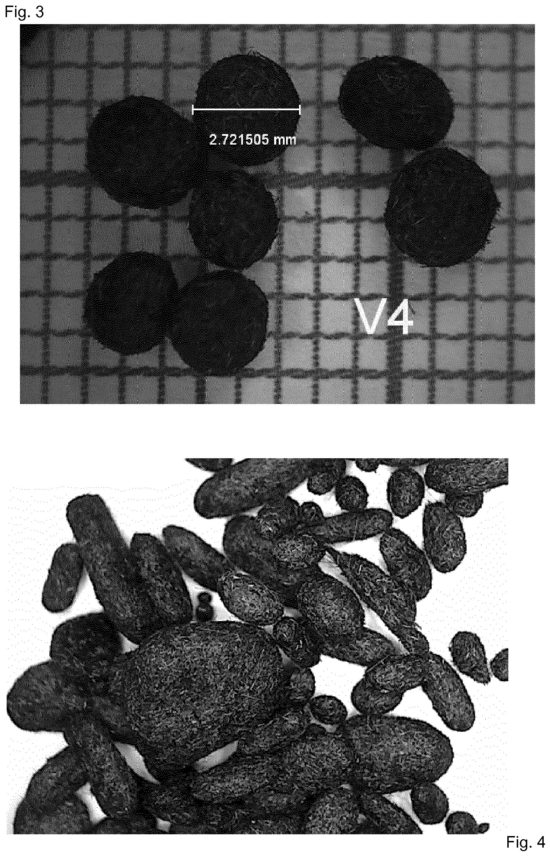

Das erfindungsgemäß genutzte Verfahren wird an den folgenden Beispielen erläutert und die erhaltenen Produkte in den Abbildungen 1 bis 6 dargestellt:
Die Form der erhaltenen Pellets zeigt deutliche Unterschiede - kugelförmige (vgl. Fig. 1, 2 und 3) und länglich ellipsoide Formen (vgl. Fig. 4 und 6) sind erkennbar. Neben der Form ist aber auch besonders wichtig, dass die erhaltenen Pellets, die aus Kohlenstofffasern und ggf. verwendeten Zuschlagstoffen bestehen, nach dem Trocknungsprozess und Abfüllung stabil sind, keinen staubenden Abrieb verursachen, ein möglichst hohes Schüttgewicht und somit problemlos über die in der Technik üblichen Dosiereinheiten der gewünschten Verarbeitung zugeführt werden kann.

Die überwiegend kugelförmigen Pellets bestehen aus überwiegend einheitlichen Fasern. Besonders feine Pellets werden mit den kurzen Fasern im Bereich bis etwa 300 µm eingestellt. Werden längere Carbonfaser mit hohen Anteilen von Fasern größer 1000 µm eingesetzt, erhält man überwiegend längliche Pellets mit einer Baseball-Struktur.

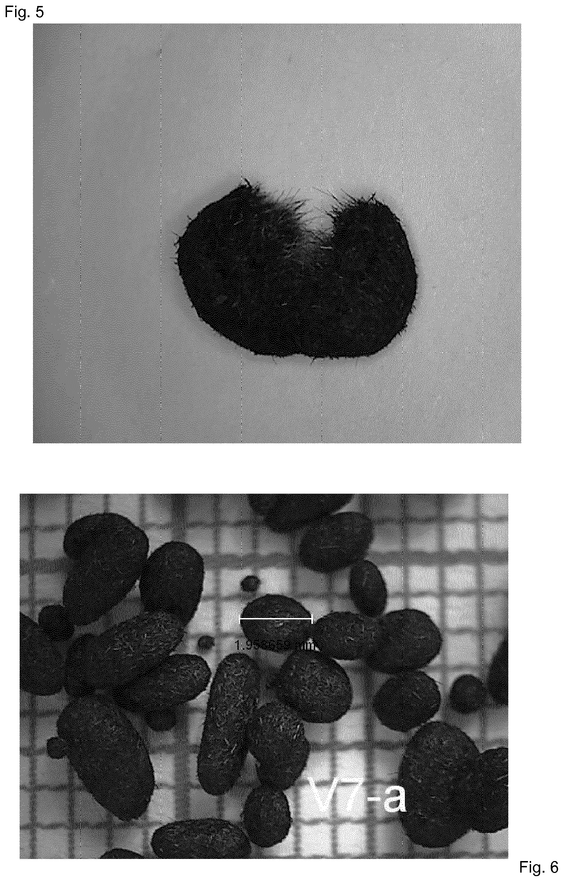

In der Fig. 5 ist ein derartiges Pellet auseinandergezogen worden, um die enthaltenen längeren Faseranteile sehr gut sichtbar zu machen. Die dichte Packung der Fasern im Inneren eines Pellets erkennt man sehr gut an dem mittig zerteilten Fibreball, der mittels Rasterelektronenmikroskop fotografiert wurde.

Im Herstellung der Pellets kann nach der folgenden allgemeinen Verfahrensweise erfolgen:
In einen EIRICH-Mischer vom Typ R08T (75 I-Kesselvolumen) werden 10 Liter einer wässrigen Binderlösung (vgl. nachfolgende Tabelle) und 9 kg pyrolysierte Carbonfasern mit einer mittleren Faserlänge etwa 150 µm eingefüllt. Der messerartige Wirbler wird mit einer variablen Drehzahl zwischen 500 bis 800 U/Min benutzt, in dieser Rezeptur mit 650 U/Min. Nach etwa 5 Minuten werden weitere 4,5 kg pyrolysierte Carbonfasern und 6 kg Binderlösung eingefüllt. Man rührt weitere 6 bis max. 12 Min. Anschließend wird das Produkt abgelassen und in eine Trockenvorrichtung überführt. Als Trockner kommen Bandtrockner, Drehrohrtrockner oder Wirbelbettrockner zum Einsatz. Vor der Trocknung wird das Schüttgewicht "nass" bestimmt, es sollte bei mindestens 550 bis 600 g/l liegen. Ferner kann man unter dem Labormikroskop die Pelletqualität überprüfen. Die getrockneten Pellets haben ein Schüttgewicht von mindestens 250 g/l.

Beispielhafte Herstellung einer 4 %igen Binderlösungen entsprechend der nachfolgenden Tabelle:

| Wasser in kg | Binder in kg | Additive (fakultativ) in kg | Mischzeit in Min. |
|---|---|---|---|
| 30 | ca. 50 %iger Acrylatbinder 2,60 | --- | 5 |
| 24,7 | ca. 40 %iger Polyurethanbinder 2,8 | --- | 5 |
| 15,5 | ca. 40%iger Polyurethanbinder 1,7 | z.B. 5 %ige Lösung Sokanal oder PVP | 40 |

## Patentansprüche

1. Kohlenstofffaserpellet-Herstellungsverfahren, umfassend
- das Schneiden und/oder Mahlen der zu Pellets zu verarbeitenden Kohlenstofffasern auf eine vorgegebene mittlere Länge,
- Mischen der Kohlenstofffasern mit einer Lösung oder Suspension zu Agglomeraten in einem Mischer, der mit einem geneigten rotierenden Kessel ausgestattet ist, wobei innerhalb des geneigten rotierenden Kessels ein gegenläufig rotierender Wirbler angeordnet ist, der das Rühren der Agglomerate vollzieht,
- Verdichten der Agglomerate durch Inkontaktbringen der Agglomerate mit der geneigten rotierenden Oberfläche und
- Trocknen der Agglomerate zu Kohlenstofffaserpellets,
**dadurch gekennzeichnet, dass**
vor dem Mischen ein Pyrolysieren der Kohlenstofffasern durchgeführt wird und die Pelletisierung durch Binder in der Lösung oder Suspension einstufig in dem Mischer erfolgt, wobei die Kohlenstofffasern Recyclat-Carbonfasern sind.

2. Kohlenstofffaserpellet-Herstellungsverfahren nach Anspruch 1,
**dadurch gekennzeichnet, dass**
die Kohlenstofffasern vor dem Mischen aus Kohlenstofffaserkompositen recycliert werden.

3. Kohlenstofffaserpellet-Herstellungsverfahren nach Anspruch 1 oder 2,
**dadurch gekennzeichnet, dass**
ein Hinzumischen von natürlichem oder synthetischem Graphit der Körnung 0 bis 100 µm, insbesondere 0,1 bis 20 µm, bis zu 50 Gew.-% zu der Kohlenstofffaser-Lösung/Suspension-Mischung erfolgt.

4. Kohlenstofffaserpellet-Herstellungsverfahren nach einem der vorangehenden Ansprüche,
**dadurch gekennzeichnet, dass**
eine wässrige emulgatorarme oder emulgatorfreie Polymerdispersion als Lösung oder Suspension verwendet wird, wobei die wässrige emulgatorarme oder emulgatorfreie Polymerdispersion eine Filmbildungstemperatur unter Raumtemperatur aufweist.

5. Kohlenstofffaserpellet-Herstellungsverfahren nach Anspruch 4,
**dadurch gekennzeichnet, dass**
für die Basis der Polymerdispersion ein Acrylsäureester-, Polyurethan- oder Polysiloxancopolymer verwendet wird.

6. Kohlenstofffaserpellet-Herstellungsverfahren nach Anspruch 4 oder 5,
**dadurch gekennzeichnet, dass**
für die Basis der Polymerdispersion Polyvinylpyrrolidon oder Polyvinylpyrrolidoncopolymere mit Acrylsäure, Acrylsäureestern, Vinylacetat oder Caprolactam, verwendet wird.

7. Kohlenstofffaserpellet-Herstellungsverfahren nach einem der vorangehenden Ansprüche,
**dadurch gekennzeichnet, dass**
nur eine erste Teilmenge der Kohlenstofffasern mit einem Teil der Lösung oder Suspension vermischt wird, wobei eine Basisemulsion gebildet wird.

8. Kohlenstofffaserpellet-Herstellungsverfahren nach Anspruch 7,
**dadurch gekennzeichnet, dass**
nach dem Mischen der ersten Teilmenge der Kohlenstofffasern mit einem Teil der Lösung oder Suspension, dem Herstellen der Basisemulsion, eine oder mehrere weitere Teilmengen der Kohlenstofffasern zusammen mit einem weiteren Teil der Lösung oder Suspension vermischt werden.

9. Kohlenstofffaserpellet-Herstellungsverfahren nach Anspruch 8,
**dadurch gekennzeichnet, dass**
das Vermischen der Teilmengen nach dem Herstellen der einzelnen Teilmengen erfolgt.

10. Kohlenstofffaserpellet-Herstellungsverfahren nach Anspruch 8,
**dadurch gekennzeichnet, dass**
das Vermischen der weiteren Teilmengen in der ersten Teilmenge erfolgt.

11. Kohlenstofffaserpellet-Herstellungsverfahren nach einem der vorangehenden Ansprüche,
**dadurch gekennzeichnet, dass**
weitere Zuschlagstoffe, Ruß, Eisenoxidpigmente oder organische Pigmente hinzugefügt werden.

12. Kohlenstofffaserpellet-Herstellungsverfahren nach einem der vorangehenden Ansprüche,
**dadurch gekennzeichnet, dass**
Kohlenstofffasern mit einem Durchmesser von mindestens 5 µm und einer mittleren Faserlänge von 30 µm bis 6000 µm und einem Anteil von Sauerstoff und Stickstoff in den oberen Atomlagen von 15 bis 17 Gew.% verwendet werden.

## Claims

1. Method for producing carbon fibre pellets, which comprises
- cutting and/or grinding, to a predefined mean length, the carbon fibres that are to be processed to form pellets,
- mixing the carbon fibres with a solution or suspension to form agglomerates in a mixer equipped with an inclined rotating vessel, wherein the inclined rotating vessel has an agitator arranged therein which rotates in the opposite direction and which stirs the agglomerates,
- compacting the agglomerates by bringing the agglomerates into contact with the inclined rotating surface, and
- drying the agglomerates to form carbon fibre pellets,
**characterized in that**
the carbon fibres are pyrolysed prior to the mixing, and the pelletization takes place in a single stage in the mixer by way of binders in the solution or suspension, wherein the carbon fibres are recycled carbon fibres.

2. Method for producing carbon fibre pellets according to claim 1,
**characterized in that**
the carbon fibres are recycled from carbon fibre composites prior to the mixing.

3. Method for producing carbon fibre pellets according to claim 1 or 2,
**characterized in that**
natural or synthetic graphite having a particle size of 0 to 100 µm, in particular 0.1 to 20 µm, are admixed with the carbon fibre-solution/suspension mixture in a proportion of up to 50 wt%.

4. Method for producing carbon fibre pellets according to one of the preceding claims,
**characterized in that**
an aqueous polymer dispersion which contains little or no emulsifier is used as the solution or suspension, wherein the aqueous polymer dispersion which contains little or no emulsifier has a film-forming temperature below room temperature.

5. Method for producing carbon fibre pellets according to claim 4,
**characterized in that**
an acrylic ester copolymer, polyurethane copolymer or polysiloxane copolymer is used for the base of the polymer dispersion.

6. Method for producing carbon fibre pellets according to claim 4 or 5,
**characterized in that**
polyvinylpyrrolidone or polyvinylpyrrolidone copolymers containing acrylic acid, acrylic esters, vinyl acetate or caprolactam is used for the base of the polymer dispersion.

7. Method for producing carbon fibre pellets according to one of the preceding claims,
**characterized in that**
only a first sub-quantity of the carbon fibres is mixed with a portion of the solution or suspension, wherein a base emulsion is formed.

8. Method for producing carbon fibre pellets according to claim 7,
**characterized in that**,
after mixing the first sub-quantity of the carbon fibres with a portion of the solution or suspension to produce the base emulsion, one or more further sub-quantities of the carbon fibres are mixed together with a further portion of the solution or suspension.

9. Method for producing carbon fibre pellets according to claim 8,
**characterized in that**
the sub-quantities are mixed after the individual sub-quantities have been produced.

10. Method for producing carbon fibre pellets according to claim 8,
**characterized in that**
the further sub-quantities are mixed into the first sub-quantity.

11. Method for producing carbon fibre pellets according to one of the preceding claims,
**characterized in that**
further additives, carbon black, iron oxide pigments or organic pigments are added.

12. Method for producing carbon fibre pellets according to one of the preceding claims,
**characterized in that**
use is made of carbon fibres having a diameter of at least 5 µm and a mean fibre length of 30 µm to 6000 µm and a proportion of oxygen and nitrogen in the upper atomic layers of 15 to 17 wt%.

## Revendications

1. Procédé de fabrication de granulés de fibres de carbone comprenant les étapes consistant à :
- couper et/ou broyer les fibres de carbone à transformer en granulés à une longueur moyenne prédéterminée,
- mélanger les fibres de carbone avec une solution ou suspension en formant des agglomérats dans un mélangeur équipé d'une cuve rotative inclinée, un agitateur tournant en sens opposé étant disposé à l'intérieur de la cuve rotative inclinée, lequel assure l'agitation des agglomérats,
- comprimer les agglomérats en mettant les agglomérats en contact avec la surface rotative inclinée, et
- sécher les agglomérats pour former des granulés de fibres de carbone,
**caractérisé en ce qu'**
une pyrolyse des fibres de carbone est effectuée avant le mélange, et la granulation par liant dans la solution ou la suspension est effectuée en une seule étape dans le mélangeur, les fibres de carbone étant des fibres de carbone recyclées.

2. Procédé de fabrication de granulés de fibres de carbone selon la revendication 1,
**caractérisé en ce que,**
avant d'être mélangées, les fibres de carbone sont recyclées à partir de composites de fibres de carbone.

3. Procédé de fabrication de granulés de fibres de carbone selon la revendication 1 ou 2,
**caractérisé en ce que**
du graphite naturel ou synthétique de granulométrie comprise entre 0 et 100 µm, en particulier entre 0,1 et 20 µm, est ajouté jusqu'à 50 % en poids au mélange fibres de carbone - solution/suspension.

4. Procédé de fabrication de granulés de fibres de carbone selon l'une des revendications précédentes,
**caractérisé en ce qu'**
une dispersion aqueuse de polymère à faible teneur en émulsifiant ou exempte d'émulsifiant est utilisée comme solution ou suspension, la dispersion aqueuse de polymère à faible teneur en émulsifiant ou exempte d'émulsifiant possédant une température de filmification inférieure à la température ambiante.

5. Procédé de fabrication de granulés de fibres de carbone selon la revendication 4,
**caractérisé en ce qu'**
un copolymère d'ester d'acide acrylique, de polyuréthane ou de polysiloxane est utilisé pour la base de la dispersion de polymère.

6. Procédé de fabrication de granulés de fibres de carbone selon la revendication 4 ou 5,
**caractérisé en ce que**
de la polyvinylpyrrolidone ou des copolymères de polyvinylpyrrolidone avec de l'acide acrylique, des esters d'acide acrylique, de l'acétate de vinyle ou du caprolactame sont utilisés pour la base de la dispersion de polymère.

7. Procédé de fabrication de granulés de fibres de carbone selon l'une des revendications précédentes,
**caractérisé en ce que**
seule une première partie des fibres de carbone est mélangée avec une partie de la solution ou de la suspension en formant une émulsion de base.

8. Procédé de fabrication de granulés de fibres de carbone selon la revendication 7,
**caractérisé en ce que,**
après le mélange de la première partie des fibres de carbone avec une partie de la solution ou de la suspension, donc la préparation de l'émulsion de base, une ou plusieurs autres parties des fibres de carbone sont mélangées avec une autre partie de la solution ou de la suspension.

9. Procédé de fabrication de granulés de fibres de carbone selon la revendication 8,
**caractérisé en ce que**
les différentes parties sont mélangées après la fabrication de chaque partie.

10. Procédé de fabrication de granulés de fibres de carbone selon la revendication 8,
**caractérisé en ce que**
le mélange des autres parties est réalisé dans la première partie.

11. Procédé de fabrication de granulés de fibres de carbone selon l'une des revendications précédentes,
**caractérisé en ce que**
d'autres additifs, de la suie, des pigments d'oxyde de fer ou des pigments organiques sont ajoutés.

12. Procédé de fabrication de granulés de fibres de carbone selon l'une des revendications précédentes,
**caractérisé en ce que**
sont utilisées des fibres de carbone ayant un diamètre d'au moins 5 µm, et une longueur moyenne de fibre comprise entre 30 µm et 6 000 µm, et une teneur en oxygène et en azote dans les couches atomiques supérieures comprise entre 15 et 17 % en poids.
